# EUROPÄISCHE PATENTSCHRIFT

(11) **EP 0 732 879 B1**
(45) Veröffentlichungstag und Bekanntmachung des Hinweises auf die Patenterteilung: **16.06.1999**
(21) Anmeldenummer: 95906949.3
(22) Anmeldetag: 14.01.1995
(51) Int. Cl.: A23B 9/18, A23B 7/144

(54) **VERFAHREN ZUR BEKÄMPFUNG VON SCHÄDLINGEN IN SCHÜTTGUT**
PROCESS FOR COMBATTING PESTS IN LOOSE MATERIAL
PROCEDE DE LUTTE CONTRE LES PARASITES DANS DES PRODUITS EN VRAC

(30) Priorität: 25.01.1994 DE 4402064
(43) Veröffentlichungstag der Anmeldung: 25.09.1996
(73) Patentinhaber: KOHLENSÄUREWERK DEUTSCHLAND GMBH, 53557 Bad Hönningen (DE)
(72) Erfinder: OPPITZ, Horst, D-04425 Taucha (DE)
(74) Vertreter: Huber, Bernhard, Dipl.-Chem.
(86) Internationale Anmeldenummer: EP9500143
(87) Internationale Veröffentlichungsnummer: WO9519712

(56) Entgegenhaltungen:
- EP-A- 0 247 555
- FR-A- 2 311 988
- FR-A- 2 531 840
- GB-A- 2 177 004
- PATENT ABSTRACTS OF JAPAN Bd. 15, Nr. 73 (M-1084) 20 Februar 1991 & JP,A,02 296 682 (ULVAC CORP.) 07 Dezember 1990

## Beschreibung

Die Erfindung bezieht sich auf ein Verfahren zur Bekämpfung von Schädlingen im Schüttgut, wobei man ein von CO₂ verschiedenes qas- oder dampfförmiges Bekämpfungsmittel unter Ausnutzung der Schwerkraft in das Gut eindringen läßt.

Zur Bekämpfung von Schädlingen (insbesondere Nagetieren, wie Mäuse, und Insekten, wie Milben, Motten und Käfer) in Schüttgut, wie beispielsweise Getreide, begast man dieses mit geeigneten Begasungsmitteln (Räuchermitteln oder Fumigantien). Begasungsmittel, die gas- oder dampfförmig vorliegen und schwerer als Luft sind, beispielsweise Methylbromid oder Phosphan (PH₃; früher "Phosphin" genannt), sind besonders vorteilhaft. Zur Ausbringung von Phosphan werden üblicherweise Vorläufer eingesetzt, die insbesondere durch Hydrolyse Phosphan entwickeln. Hierzu gehören Zink-, Kalzium- und Aluminiumphosphide, wobei sich Aluminiumphosphid als besonders vorteilhaft erwiesen hat. Man geht dabei so vor, daß man festes Phosphid auf dem Oberfläche des Schüttgutes verteilt. Das bei der Hydrolyse entstehende Phosphan ist schwerer als Luft und "sickert" allmählich unter Ausnutzung der Schwerkraft in das Schüttgut ein, wobei es schädlingsbekämpfend wirkt. Diese Schädlingsbekämpfungsmethode ist recht zeitaufwendig.

Die FR-A-2311988 beschreibt ein Verfahren zur Behandlung von Getreide mit flüssigem CO₂ und Methylbromid. Das flüssige CO₂ wird durch eine Vorrichtung mit bestimmten geometrischen Dimensionen auf das Getreide aufgebracht und durchdringt zusammen mit dem Schädlingsbekämpfungsmittel Methylbromid das Getreide. Die Verwendung eines anderen Schädlingsbekämpfungsmittels als Methylbromid wird nicht in Betracht gezogen.

Bei einem weiteren Verfahren wird zur Entwesung gasförmiges Phosphin durch Schüttgut geleitet. Wie in der FR-A-2531840 beschrieben, wird dabei das Phosphan mit Hilfe von Zirkulationsmitteln so durch das Schüttgut geleitet, daß eine möglichst gleichmäßige Verteilung des EntwesungsmittelS vorliegt. Weiterhin ist aus der EP-A-0 247 555 die Bereitstellung eines Entwesungsfluids, das Kohlendioxid und Phosphan umfaßt, bekannt. Das Entwesungsgas wird unter relativ hohem technischem Aufwand vorbereitet und ist zur gasförmigen Verwendung vorgesehen.

Eine andere Methode sieht die Verwendung von Kohlendioxid als Schädlingsbekämpfungsmittel vor, dabei wird das zu behandelnde Gut mit Kohlendioxid bei erhöhtem Druck behandelt. Diese Methode ist einerseits recht teuer, andererseits setzt sie naturgemäß völlig abdichtbare Behältnisse, die zudem druckfest sein müssen, voraus.

Aufgabe der vorliegenden Erfindung ist es, ein verbessertes Verfahren zur Schädlingsbekämpfungsmittel anzugeben. Diese Aufgabe wird durch das Verfahren der vorliegenden Erfindung gelöst.

Das erfindungsgemäße Verfahren von Schädlingen im Schüttgut, wobei man ein von CO₂ verschiedenes gas- oder dampfförmiges Schädlingsbekampfungsmittelsmittel in das Schüttgut eindringen läßt, sieht vor, daß man zusätzlich CO₂ unter Ausnutzung der Schwerkraft in das Schüttgut eindringen läßt, wobei man zusätzlich CO₂ in Form von Trockeneis in gelochten Behältern auf das Schüttgut auflegt und den Gasstrom, umfassend das Schädlingsbekämpfungsmittel und CO₂, unter Ausnutzung der Schwerkraft von oben nach unten in das Schüttgut eindringen läßt.

Beispielsweise kann man Trockeneisschnee oder Trockeneisformkörper wie Pellets, Würfel oder Scheiben, in Oberflächenbereiche oder auf der Oberfläche des Schüttguts einbringen. Im Rahmen der vorliegenden Erfindung wird das Trockeneis am vorteilhaftesten in Form von Scheiben eingesetzt, deren Gewicht optimal im Bereich von 2 bis 2,5 kg liegt. Besonders günstig ist es, das Trockeneis bzw. die Trockeneisscheiben in Behältern (vorteilhaft Styropor^{R}-Behälter) auf das Schüttgut zu stellen, wobei die Behälter für CO₂ durchlässig sind, z. B. gelocht sind. Für Trockeneisscheiben des Gewichts von 2 bis 2,5 kg sind Behälter mit einer Grundfläche von beispielsweise 10 x 16 cm und einer Höhe von 16 cm sehr gut geeignet; sie sollten einen festsitzenden Deckel aufweisen. Gewünschtenfalls kann man auch eine Verteilung der Kohlensäurepartikel auf der Oberfläche vornehmen. Die Menge an Kohlendioxid kann in einem weiten Bereich schwanken, dabei soll die Menge allerdings nicht derart groß sein, daß das Schüttgut, insbesondere wenn es sich um Getreide oder andere Körnerfrüchte handelt, unerwünscht abkühlt. Vorzugsweise setzt man 125 bis 500 g, insbesondere 150 bis 250 g, Trockeneis pro Tonne zu behandelndem Schüttgut ein.

Prinzipiell kann man gemäß dem erfindungsgemäßen Verfahren beliebige gas- oder dampfförmige Schädlingsbekämpfungsmittel einsetzen, insbesondere solche, die man unter Ausnutzung der Schwerkraft in das Schüttgut eindringen läßt. Bevorzugtes Schädlingsbekämpfungsmittelsmittel ist Phosphan (PH₃), bzw. Phosphan liefernde Vorläufer wie Metallphosphide, die unter Hydrolydse Phosphan freisetzen. Bevorzugte Vorläufer sind Aluminiumphosphid, Zinkphosphid und Kalziumphosphid, insbesondere Aluminiumphosphid.

Überraschenderweise wurde festgestellt, daß man die Menge an Schädlingsbekämpfungsmittel auf 90 bis 30 Gew.-%, ja sogar auf einen noch niedrigeren Wert, derjenigen Menge reduzieren kann, die ohne Zusatz von CO₂ eingesetzt wird. So setzt man vorzugsweise Aluminiumphosphid als Schädlingsbekämpfungmittel ein, und zwar in einer solchen Menge, daß 2 bis 8 g, vorzugsweise 3 bis 5 g PH₃ pro Tonne zu behandelndem Schüttgut freigesetzt werden.

Das erfindungsgemäße Verfahren wird zweckmäßig bei einer Temperatur von 4 bis 25 °C im Schüttgut durchgeführt. Es kann aber auch bei höheren oder tieferen Temperaturen, z.B. zwischen 0° und 40°C, durchgeführt werden. Man kann es bei gegenüber dem Umgebungsdruck vermindertem oder erhöhtem Druck durchführen. Vorzugsweise führt man es bei Umgebungsdruck, d.h. bei etwa 1 bar (abs.) durch. Der Zeitbedarf ist sehr viel niedriger als bei entsprechenden Bekämpfungsverfahren bislang üblich. So wurde festgestellt, daß bei Verwendung von Aluminiumphosphid als Vorläufer des Schädlingsbekämpfungsmittels Phosphan bereits nach 12 Stunden in 20 Meter Tiefe im Schüttgut in einer Konzentration von 25 ppm vorliegt; ohne zusätzliche Anwendung von CO₂ braucht man hierfür mindestens 48 Stunden.

Insbesondere bei Verwendung von Phosphan oder einem Vorläufer davon sind den Flammpunkt herabsetzende oder die Explosionsneigung herabsetztende Zusätze wie fluorierte Kohlenwasserstoffe unnötig.

Prinzipiell eignet sich das Verfahren zur Behandlung beliebigen Schüttgutes, dessen Entwesung wünschenswert ist. Besonders geeignet ist das Verfahren zur Anwendung auf Körnerprodukte oder deren Weiterverarbeitungserzeugnisse, beispielsweise Getreide und Getreideerzeugnisse.

Das erfindungsgemäße Verfahren weist erhebliche Vorteile gegnüber bekannten Verfahren auf. beispielsweise kann die Menge an anzuwendendem Schädlingsbekämpfungsmittel erheblich gesenkt werden: die Begasung mit Phosphan erfordert 17 bis 28 g Phosphan pro Tonne zu behandelndem Getreide. Diese Menge kann beim erfindungsgemäßen Verfahren auf 2 bis 8 g Phosphan reduziert werden. Dabei ist der Verbrauch an Kohlendioxid vergleichsweise gering. Ferner zeichnet sich das verfahren durch eine schnelle Durchdringung des Schüttguts aus, wobei außerdem eine Durchdringung auch in tiefe Bereiche möglich ist. Insgesamt wird also die Umweltbelastung stark herabgesetzt.

Ein weiterer Gegenstand der vorliegenden Erfindung ist ein Kombinationspräparat zur Schädlingsbekämpfungsmittel, umfassend Phosphan oder einen Vorläufer davon, und CO₂ in form von Trockeneis. Vorzugsweise umfaßt das Kombinationspräparat zur Schädllngsbekämpfungsmittel einerseits Phosphan oder ein unter Hydrolyse Phosphan freisetzendes Metallphosphid, und CO₂ in Form von Trockeneis. Dabei kann das CO₂ in Form von Trockeneisschnee, Pellets oder vorzugsweise Trockeneisscheiben vorliegen. Ein besonders bevorzugtes Kombinationspräparat umfaßt Aluminiumphosphid und CO₂ in Form von Trockeneisscheiben.

Ein weiterer Gegenstand der Erfindung ist ein Kit zur Durchführung des erfindungsgemäßen Verfahrens. Es umfaßt Phosphan oder einen Vorläufer davon und CO₂ in Form von Trockeneis zur simultanen Anwendung in voneinander getrennten Behältern. Ein bevorzugtes Kit umfaßt Aluminiumphosphid und CO₂ in Form von Trockeneis, insbesondere von Trockeneisschnee, Trockeneispallets oder besonders Trockeneisscheiben. Vorzugsweise liegen die Bestandteile des Kits in gelochten Behältern vor, wobei der für das Trockeneis vorgesehene Behälter zweckmäßig ein Isoliergefäß, wie beispielsweise ein gelochter Behälter aus Styropor ist.

Selbstverständlich kann man das erfindungsgemäße Verfahren in geschlossenen Behältern oder in Aufbewahrungsräumen wie Silos durchführen. Ein Vorteil des Verfahrens ist es, daß man es auch im Freien durchführen kann. Notwendig ist hier die Abdeckung des Schüttguts nach Aufbringen des Schädlingsbekämpfungsmittels und des Trockeneises durch mehrschichtige, PH₃-undurchlässige Folie.

Die vorliegende Erfindung wird durch das folgende Beispiel weiter erläutert, ohne daß sie in ihrem Umfang eingeschränkt werden sollen.

### Beispiel: Schädlingsbekämpfung im Getreidesilo

Die Schädlingsbekämpfung wurde in einem Getreidesilo von 28 m Höhe und 8 m Durchmesser durchgeführt. Im Silo wurden 7.400 t Roggen (Höhe des Schüttguts 20 m) gespeichert. Die Temperatur des Schüttguts betrug etwa 24 °C. Das Schüttgut war sehr stark mit Schädlingen befallen (insbesondere Kornkäfer, Getreidelaufkäfer und Essigfliege). Als Schädlingsbekämpfungsmittel wurde Aluminiumphosphid (Firma Depia, Freiburg, Wirkstoffgehalt 57 %) eingesetzt. Die Aufwandmenge an Schädlingsbekämpfungsmittel betrug 37 kg (5 g/t) PH₃ (AL). Die Aufwandmenge an Trockeneis betrug 1.200 kg (0,160 kg/t). Das Trockeneis wurde in Scheiben von einem Gewicht von 2,5 kg auf Styroportafeln auf dem Getreide ausgelegt. Das Schüttgut wurde dann durch eine mehrschichtige, PH₃-undurchlässige Folie abgedeckt. Zur zuverlässigen Schädlingsbekämpfung sollte der Sollwert für die PH₃-Konzentration 200 ppm betragen, und zwar 4 Tage lang. Der PH₃-Istwert wurde in 20 m Tiefe im Schüttgut mittels Dräger-Meßröhrchen (PH₃ 25/a) gemessen. Der Istwert in 20 m Tiefe betrug nach 12 Stunden 25 ppm, nach 25 Stunden 200 ppm und nach 50 Stunden 400 ppm. Nach 72 Stunden war das Schüttgut vollständig entwest.

## Patentansprüche

1. Verfahren zur Bekämpfung von Schädlingen in Schüttugt, wobei man als Schädlingsbekämpfungsmittel Phosphan (PH₃) oder einen phosphanliefernden Vorläufer einsetzt und das Schädlingsbekämpfungsmittel gas- oder dampfförmig in das Schüttgut eindringen läßt,
**dadurch gekennzeichnet,**
daß man zusätzlich CO₂ in Form von Trockeneis in gelochten Behältern auf das Schüttgut auflegt und den Gasstrom, umfassend das Schädlingsbekämpfungsmittel und CO₂, unter Ausnutzung der Schwerkraft von oben nach unten in das Schüttgut eindringen läßt.

2. Verfahren nach Anspruch 1,
**dadurch gekennzeichnet,**
daß man die Menge an Schädlingsbekämpfungsmittel auf 90 bis 30 Gew.-% derjenigen Menge reduziert, die ohne Zusatz von CO₂ eingesetzt wird.

3. Verfahren nach Anspruch 1,
**dadurch gekennzeichnet,**
daß man Zinkphosphid, Aluminiumphosphid oder Kalziumphosphid, vorzugsweise Aluminiumphosphid einsetzt.

4. Verfahren nach Anspruch 3,
**dadurch gekennzeichnet,**
daß man Aluminiumphosphid als Schädlingsbekämpfungsmittel einsetzt und zwar in einer solchen Menge, daß 2 bis 8 g, vorzugsweise 3 bis 5 g Phosphan pro Tonne Schüttgut freigesetzt werden.

5. Verfahren nach einem der vorhergehenden Ansprüche,
**dadurch gekennzeichnet,**
daß man pro Tonne zu behandelndem Schüttgut 125 bis 500 g Trockeneis einsetzt.

6. Verfahren nach einem der vorhergehenden Ansprüche,
**dadurch gekennzeichnet,**
daß es sich beim Schüttgut um Körnerfrüchte, vorzugsweise Getreide handelt.

7. Kombinationspräparat zur Schädlingsbekämpfung zur Verwendung in einem Verfahren nach Anspruch 1, umfassend Phosphan oder einen Vorläufer davon und CO₂ in Form von Trockeneis.

8. Kombinationspräparat nach Anspruch 7, umfassend Phosphan oder ein unter Hydrolyse Phosphan freisetzendes Metallphosphid und CO₂ in Form von Trockeneis.

9. Kit zur Durchführung des Verfahrens nach einem der Ansprüche 1 bis 6, umfassend Phosphan oder einen Vorläufer davon und CO₂ in Form von Trockenes zur simultanen Anwendung in voneinander getrennten Behältern.

10. Kit nach Anspruch 9, umfassend Aluminiumphosphid und CO₂ in Form von Trockeneis zur simultanen Anwendung in von einander getrennten Behältern.

## Claims

1. Method for controlling pests in bulk material in which phosphane (PH₃) or a precursor supplying phosphane is used as a pesticide and the pesticide is allowed to penetrate into the bulk material as a gas or a vapour,
**wherein**
additionally CO₂ in the form of dry ice is placed on the bulk material in perforated containers and the gas stream comprising the pesticide and CO₂ is allowed to penetrate into the bulk material from top to bottom by means of gravity.

2. Method as claimed in claim 1,
**wherein**
the amount of pesticide is reduced to 90 to 30 % by weight of that amount which would be used without addition of CO₂.

3. Method as claimed in claim 1,
**wherein**
zinc phosphide, aluminium phosphide or calcium phosphide, preferably aluminium phosphide is used.

4. Method as claimed in claim 3,
**wherein**
aluminium phosphide is used as a pesticide and namely in such an amount that 2 to 8 g, preferably 3 to 5 g phosphane is released per ton of bulk material.

5. Method as claimed in one of the previous claims,
**wherein**
125 to 500 g dry ice is used per ton of bulk material to be treated.

6. Method as claimed in one of the previous claims,
**wherein**
the bulk material is a cereal, preferably grain.

7. Combination preparation for controlling pests for use in a method as claimed in claim 1, comprising phosphane or a precursor thereof and CO₂ in the form of dry ice.

8. Combination preparation as claimed in claim 7, comprising phosphane or a metal phosphide that releases phosphane when hydrolyzed and CO₂ in the form of dry ice.

9. Kit for carrying out a method as claimed in one of the claims 1 to 6, comprising phosphane or a precursor thereof and CO₂ in the form of dry ice for simultaneous use in containers which are separated from one another.

10. Kit as claimed in claim 9, comprising aluminium phosphide and CO₂ in the form of dry ice for simultaneous use in containers which are separated from one another.

## Revendications

1. Procédé de lutte contre les parasites dans les produits en vrac, dans lequel on met en oeuvre, en tant que moyen de lutte contre les parasites, un phosphane (PH₃) ou un précurseur fournissant du phosphane et on fait pénétrer le moyen de lutte contre les parasites dans le produit en vrac sous la forme de gaz ou de vapeur,
Caractérisé en ce que,
On applique de plus du CO₂ sous forme de neige carbonique ou glace séchée dans des récipients perforés sur le produit en vrac et en ce que l'on fait pénétrer le courant gazeux, contenant le moyen de lutte contre les parasites et le CO₂, en utilisant la force de gravité s'exerçant du haut vers le bas, dans le produit en vrac.

2. Procédé selon la revendication 1,
caractérisé en ce que,
la quantité du moyen de lutte contre les parasites est réduite à 90 jusqu'à 30% en poids de la quantité qui est mise en oeuvre sans addition de CO₂.

3. Procédé selon la revendication 1,
caractérisé en ce que,
on met en oeuvre du phosphure de zinc, du phosphure d'aluminium ou du phosphure de potassium, de préférence du phosphure d'aluminium.

4. Procédé selon la revendication 3,
caractérisé en ce que,
on met en oeuvre un phosphure d'aluminium en tant que moyen de lutte contre les parasites et ce, dans une quantité telle que sont libérés 2 à 8 g, de préférence 3 à 5 g de phosphane par tonne de produit en vrac.

5. Procédé selon une des revendications précédentes,
caractérisé en ce que,
on met en oeuvre 125 à 500 g de neige carbonique par tonne de produit en vrac à traiter.

6. Procédé selon une des revendications précédentes,
caractérisé en ce que,
pour le produit en vrac , il s'agit de grains, de préférence de céréales.

7. Préparation combinée pour la lutte contre les parasites destinée au procédé selon la revendication 1, contenant du phosphane ou un précurseur de celui-ci et du CO₂ sous forme de neige carbonique.

8. Préparation combinée selon la revendication 7, contenant du phosphane ou un phosphure métallique libérant du phosphane sous hydrolyse et du CO₂ sous forme de neige carbonique.

9. Kit pour la réalisation du procédé selon une des revendications 1 à 6, contenant du phosphane ou un précurseur de celui-ci et du CO₂ sous forme de neige carbonique pour l'application simultanée dans des récipients séparés entre eux.

10. Kit selon la revendication 9, contenant du phosphure d'aluminium et du CO₂ sous forme de neige carbonique pour l'application simultanée dans des récipients entre eux.
